(19) Europäisches Patentamt

European Patent Office

Office européen des brevets

(11) Veröffentlichungsnummer: **0 236 813**
B1

(12) # EUROPÄISCHE PATENTSCHRIFT

(45) Veröffentlichungstag der Patentschrift:
27.06.90

(21) Anmeldenummer: 87102349.5

(22) Anmeldetag: 19.02.87

(51) Int. Cl.⁵: **B01D 3/10**, B01D 3/42

(54) Verfahren und Vorrichtung zum Vakuum-Verdampfen eines Komponentengemisches.

(30) Priorität: 07.03.86 DE 3607605

(43) Veröffentlichungstag der Anmeldung:
16.09.87 Patentblatt 87/38

(45) Bekanntmachung des Hinweises auf die Patenterteilung:
27.06.90 Patentblatt 90/26

(84) Benannte Vertragsstaaten:
CH DE FR GB IT LI NL SE

(56) Entgegenhaltungen:
DE-A- 3 413 385

(73) Patentinhaber: EBRO Electronic GmbH,
Peringerstrasse 10, D-8070 Ingolstadt(DE)

(72) Erfinder: Sternemann, Karl-Heinz, Dipl.-Ing. (FH),
Sessgasse 13a, D-7582 Bühlertal(DE)
Erfinder: Knopf, Franz, Dipl.-Ing. (FH), Kantstrasse 2,
D-7580 Bühl(DE)
Erfinder: Bross, Erhard, Aretinstrasse 45,
D-8071 Brautlach(DE)

(74) Vertreter: Gauger, Hans-Peter, Dipl.-Ing., Müller,
Schupfner & Gauger
Maximilianstrasse 6 Postfach 10 11 61,
D-8000 München 1(DE)

## Beschreibung

Die Erfindung bezieht sich auf ein Verfahren zum Vakuum-Verdampfen eines wenigstens zweifachen Komponentengemisches der durch den Oberbegriff des Patentanspruches 1 angegebenen Gattung sowie auf eine Vorrichtung zur selbsttätig gesteuerten Durchführung dieses Verfahrens.

Bei einem aus der DE-A-34 13 385 bekannten Verfahren der angegebenen Gattung wird mittels eines Drucksensors das sich nach dem Einschalten der Vakuumpumpe in dem Verdampfersystem einstellende Vakuum gemessen. Der über einer vorbestimmten Zeiteinheit differenzierte Meßwert für diesen Systemdruck bildet einen Istwert, der zur Steuerung des Ausschalt-Zeitpunktes der Vakuumpumpe einen Vergleich mit einem Sollwert erfährt, welcher für eine auf die gleiche Zeiteinheit bezogene Druckabnahme des Verdampfersystems vorgegeben ist. Die Vorgabe des Sollwertes setzt dabei eine zumindest angenäherte Kenntnis der leichter siedenden Komponente voraus, die zur Rückgewinnung als Destillat in dem zu verdampfenden Komponentengemisch enthalten ist. Auch muß der Differentialquotient aus Druck und Zeit, mit welchem bei der Vorgabe des Sollwertes eine asymptotische Annäherung an den Siededruck der leichter siedenden Komponente berücksichtigt wird, vorhergehend ermittelt werden und sollte für eine größere Vielzahl von Komponenten entweder tabellarisch oder bereits steuerungsmäßig gespeichert sein, um eine rationelle Anwendbarkeit des Verfahrens zu ermöglichen.

Die Steuerung des Ausschalt-Zeitpunktes der Vakuumpumpe ist bei dem bekannten Verfahren eine mit einer Hystereseschleife ausgebildete Zweipunktregelung, mittels welcher beim Verdampfen eines Komponentengemisches eine möglichst weitgehende Annäherung an den Siedepunkt der leichter siedenden Komponente bezweckt wird. Für diese Annäherung wird eine bestimmte Siedetemperatur vorgegeben, die für den as Sollwert berücksichtigten Siededruck dieser also für das Gemisch nur vermuteten Komponente aus den experimentell ermittelten Siede- und Taukurven ihres Siedediagramms abgeleitet wird. Die Annäherung an den Siedepunkt einer solchen nur mutmaßlich leichter siedenden Gemischkomponente wird dabei auch durch eine Unterschiedlichkeit des temperatur- und druckabhängigen Verhaltens jeder noch in dem Gemisch enthaltenen Komponente beeinflußt, weshalb es für ihre optimale Rückgewinnung als Destillat bereits relativ schwierig ist, den für den Beginn der Kondensation zu Ausschalten der Vakuumpumpe genutzten Zeitpunkt genügend präzise zu erfassen. Zu einer insoweit unerwünschten Fehleranhäufung kommt es daher bei dem Vakuum-Verdampfen jedes mehr als zweifachen Vielkomponentengemisches, weil dabei diese zeitlich aufeinanderfolgende Vorgabe von nur angenäherten Sollwerten dem weiteren Einfluß von sich laufend verändernden Verfahrensparametern ausgesetzt ist, so insbesondere der Änderung der Konzentration aller in dem Gemisch ursprünglich enthalten gewesenen Komponenten. Bei solchen Vielkomponentengemischen können daher auch solche Gemischkomponenten wenn überhaupt nur mit einem sehr schlechten Wirkungsgrad rückgewonnen werden, bei denen die Siedepunkte eng benachbart sind.

Aus der DE-U-85 24 023.0 ist für einen Rotationsverdampfer, der einen mit einer Heizeinrichtung erhitzbaren Verdampferkolben, eine durch Kühlwasser kühlbaren Kondensator und eine zur Erzeugung eines Vakuums im Kondensator und im Verdampferkolben angeordnete Vakuumpumpe umfaßt, bekannt, zur Bildung eines Temperatur-Druck-Regelsystems für das Verdampfen eines Komponentengemisches einen die Systemtemperatur messenden Temperatursensor und einen den Systemdruck messenden Drucksensor an dem Kondensator anzuordnen. Beide Sensoren sind über je einen Meßwertvergleicher an ein in der Absaugleitung der Vakuumpumpe angeordnetes Sperrventil angeschlossen, um in Abhängigkeit von einstellbaren Meßwertvorgaben das Sperrventil für ein Aus- und Einschalten der Vakuumpumpe zu steuern. Für diese somit ebenfalls auf einer einfachen Zweipunktregelung fußende Steuerung ist wiederum eine zumindest angenäherte Kenntnis jeder zur Rückgewinnung als Destillat ausgewählten Gemischkomponente erforderlich, um auch unter Berücksichtigung eines Zeitfaktors einen mit dem gattungsgemäßen Verfahren etwa vergleichbaren Wirkungsgrad zu erzielen.

Aus der DE-A-27 00 894 ist noch bekannt, den Wasserverbrauch des Kondensators eines solchen Rotationsverdampfers mit der Maßnahme zu verringern, daß der Kondensator nur während des Rotationsantriebes des Verdampfersystems und/oder während der Einschaltzeit der Heizeinrichtung mit dem Kühlwasser durchströmt wird. Dabei ist für diese Maßnahme, die nach der DE-A-27 22 066 auch auf den Wasserverbrauch einer als Vakuumpumpe verwendeten Wasserstrahlpumpe erweitert ist, auf die mt einem zu großen und daher zu teuren apparativen Aufwand erklärte Unzweckmäßigkeit hingewiesen, die Verringerung des Wasserverbrauchs mit iner nur zu diesem Zweck noch bekannnten Temperaturmessung des Kühlwassers zu verknüpfen.

Die durch die Patentansprüche gekennzeichnete Erfindung löst die Aufgabe, zum Vakkuum-Verdampfen eines Komponentengemisches ein Verfahren und eine Vorrichtung der angegebenen Gattung derarauszubilden, daß auch ohne eine vorhergehende, wenigstens angenäherte Kenntnis über die einzelnen Gemischkomponenten für deren Rückgewinnung ein verbesserter Wirkungsgrad unter Einbeziehung auch eines vergleichenden Zeitfaktors erzielbar ist und somit für die Sollwert-Vorgabe eines systembedingten Verfahrensparameters ein größerer Freiheitsgrad erhalten wird.

Das erfindungsgemäße Verfahren ergibt die Vorteile, daß die Ein- und Austrittstemperaturen des Kühlmediums einfach und gleichzeitig mit höchster Präzision gemessen werden können. Eine beginnende Kondensation des Dampfes einer siedenden Gemischkomponente stellt sich damit als der entsprechend präzise erfaßbare Zeitpunkt dar, in welchem nach dem Einschalten der Vakuumpumpe zwischen diesen Temperaturmeßwerten eine Differenz auftritt. Es kann somit für diese Differenz eine minimale Regelgröße vorgegeben werden, um dem Vergleich mit den in der jeweiligen Größenordnung an dieser Vorgabe orientierten Differenz-Schwellwerten die Zeitpunkte ebenso präzise zu erfassen, in denen die Vakuumpumpe für die Rückgewinnung einer ersten Gemischkomponente ausgeschaltet und danach wieder eingeschaltet wird um das verbleibende Gemisch einem nächsten Soll-Istwert-Vergleich zu unterwerfen, der auf die mögliche Rückgewinnung einer weiteren Gemischkomponente mit einem abweichenden Siedepunkt ausgerichtet ist. Auch ohne eine nähere Kenntnis über die einzelnen Gemischkomponenten ist es somit möglich, bei einer Durchführung jedes Soll-Istwert-Vergleichs zwischen hinreichend engen Grenzen eine optimale Annäherung an deren jeweils maßgeblichen Siedepunkt zu erhalten und damit den an einer optimalen Rückgewinnung aller in dem Gemisch enthaltenen Komponenten orientierten Wirkungsgrad entsprechend zu verbessern. Die Verbesserung ist dabei ursächlich auf eine mit der Temperaturmessung des Kühlwassers bezweckte Erfassung des bei der Kondensation des Dampfes jeder Gemischkomponente als Kondensationswärme erzeugten Wärmestromes zurückführbar.

Ein Ausführungsbeispiel der Erfindung wird nachfolgend anhand der Zeichnung in der Anwendung bei einem Rotationsverdampfer näher erläutert. Es zeigt

Fig. 1 eine Schemadarstellung eines Rotationsverdampfers mit den Merkmalen der Erfindung,

Fig. 2 ein Schaubild der bei dem Rotationsverdampfer gemäß Fig.1 gesteuerten Druck- und Temperaturkurven, wobei das Verdampfen eines Vielkomponentengemisches angenommen ist, und

Fig. 3 ein Blockdiagramm der bei dem Rotationsverdampfer gemäß Fig.1 vorgesehenen Steuervorrichtung.

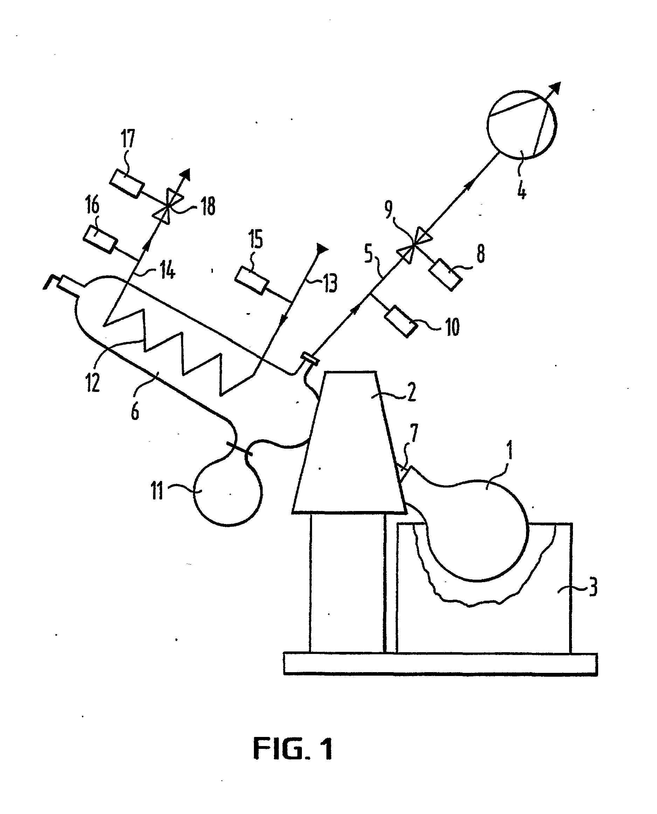

Gemäß Fig.1 umfaßt ein für Laboratoriumszwecke zum Vakuum-Verdampfen eines Komponentengemisches vorgesehener Rotationsverdampfer einen Verdampferkolben 1, der das für eine Rückgewinnung wenigstens einer Komponente zu verdampfende Gemisch aufnimmt. Der Verdampferkolben 1 ist in einer einen Antriebsmotor aufnehmenden Kolbenhalterung 2 drehbar gelagert und wird in einer Ruhestellung in ein mittels einer Heizeinrichtung aufheizbares Heizbad 3 eingetaucht. Durch das Heizbad 3 kann das Komponentengemisch auf eine Siedetemperatur erhitzt werden, die dem Siedepunkt seiner mutmaßlich am leichtesten siedenden Komponente angenähert ist. Daneben kann die Siedetemperatur noch durch eine Vakuumpumpe 4 eine mit einem Temperatur-Druck-Regelsystem geregelte Verschiebung auf eine alle Gemischkomponenten einschließende Niedrigwert-Regelgröße erfahren.

Die Vakuumpumpe 4 ist als eine Wasserstrahlpumpe ausgebildet und mit einer Absaugleitung 5 an einen Kondensator 6 angeschlossen. Der Kondensator 6 ist mittels eines durch die Kolbenhalterung 2 drehbar gelagerten Verbindungsrohres 7 mit dem Verdampferkolben 1 verbunden. In der Absaugleitung 5 ist ein mittels eines Elektromagneten 8 betätigbares Sperrventil 9 angeordnet. Bei geöffnetem Sperrventil 9 und eingeschalteter Vakuumpumpe 4 wird somit im Kondensator 6 und im Verdampferkolben 1 ein Vakuum erzeugt, das mittels eines Drucksensors 10 meßbar ist. Bei Vorgabe einer bestimmten Siedetemperatur für das in dem Verdampferkolben 1 enthaltene Komponentengemisch wird daher eine mit dem Anlegen des Vakuums bezweckte Erniedrigung des den Siedepunkt jeder Gemischkomponente mitbestimmenden Siededrucks unterbrochen, wenn die Absaugleitung 5 durch ein Schließen des Sperrventils 9 gegen die Vakuumpumpe 4 abgesperrt wird. Sofern das Schließen des Sperrventils 9 zu einem mit dem Erreichen des Siedepunkts einer Gemischkomponente übereinstimmenden Zeitpunkt vorgenommen wird, so kann dann anschließend deren Rückgewinnung als Destillat eingeleitet werden. Das Destillat wird durch eine Kondensation des in den Kondensator 6 überführten Dampfes der Gemischkomponente erhalten und in einem Auffangkolben 11 gesammelt. Die Rückgewinnung als Destillat kann dabei durch ein Einschalten des Rotationsantriebes für den Verdampferkolben 1 und den mit ihm verbundenen Kondensator 6 beschleunigt werden.

Der Kondensator 6 weist eine Kühlschlange 12 auf, die an eine Zulaufleitung 13 und an eine Ablaufleitung 14 für Kühlwasser angeschlossen ist. Die Zu- und Ablaufleitungen 13,14 sind an einer dem Kondensator 6 nahen Stelle je mit einem Temperatursensor 15,16 versehen, womit die Eintrittstemperatur $\vartheta_E$ und die Austrittstemperatur $\vartheta_A$ des Kühlwassers gemessen werden können. Solange bei geöffnetem Sperrventil 9 und eingeschalteter Vakuumpumpe 4 der in dem Verdampferkolben 1 gebildete Dampf über die Absaugleitung 5 abgesaugt wird, unterbleibt jede wesentliche Kondensatbildung an der Kühlschlange 12, so daß mit den beiden Sensoren 15,16 gleiche Meßwerte für die Ein- und Austrittstemperaturen des Kühlwassers erfaßt werden. Da jede Kondensatbildung an der Kühlschlange 12 auf einen Energieaustausch mit dem Kühlwasser bzw. eine damit gleichzusetzende Wärmeströmung zurückführbar ist, wird sich deren Beginn mit einer andererseits erhaltenen Veränderung des mit dem Sensor 16 erfaßten Meßwertes für die Austrittstemperatur $\vartheta_A$ des Kühlwassers ankündigen. Stromabwärts von dem Sensor 16 ist in der Ablaufleitung 14 schließlich noch ein ebenfalls mittels eines Elektromagneten 17 betätigbares Sperrventil 18 angeordnet.

Das Temperatur-Druck-Regelsystem des Rotationsverdampfers ist derart beschaffen, daß nach einer anfänglichen Aufheizung des Komponentengemisches auf eine für den gesamten Prozeßablauf beibehaltene Niedrigwert-Regeltemperatur eine Gemischkomponente zu dem Zeitpunkt ziemlich rasch zu verdampfen beginnt, wenn bei geöffnetem Sperrventil 9 und eingeschalteter Vakuumpumpe 4 ein ihrem Siededruck angenähertes Vakuum erzeugt ist. Die im Vergleich zu der Siedetemperatur niedrigere Temperatur des Kühlwassers erfährt daher während der Anfangsphase einer Kondensatbildung an der Kühlschlange 12 die vorerwähnte Erhöhung in der Ablaufleitung 14, so daß sich eine stetig vergrößernde Differenz $\Delta\vartheta$ zwischen der Austrittstemperatur $\vartheta_A$ und der Eintrittstemperatur $\vartheta_E$ einstellt. Diese Differenz der beiden Temperaturmeßwerte für das Kühlwasser, die also auf dessen Energieaustausch mit jedem aus dem Verdampferkolben 1 überführten Dampf einer Gemischkomponente für die Dauer der Kondensatbildung zurückführbar ist, ergibt als Istwert eine Stellgröße, mit welcher der gesamte Prozeßablauf für eine Rückgewinnung aller in dem Gemisch enthaltenen Komponenten gesteuert wird.

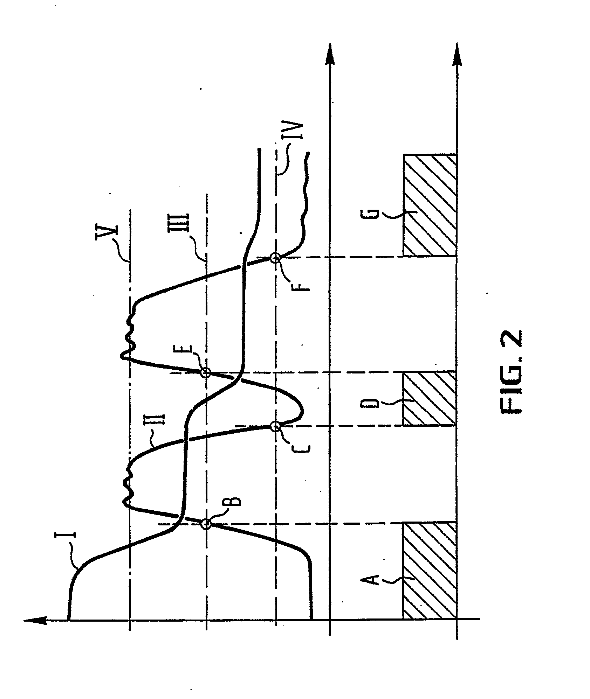

In dem Schaubild der Fig.2 ist mit dem Verlauf der Kurve I ein möglicher Prozeßablauf beim Vakuum-Verdampfen eines Komponentengemisches verdeutlicht, dessen einzelne Komponenten unbekannt sind. Das Gemisch wird entsprechend der vorstehenden Hinweise zuerst mittels des Heizbades 3 auf eine Temperatur erhitzt, die sich als eine gemischbedingte und nach Erfahrungswerten eingestellte Niedrigwert-Regeltemperatur definieren läßt und für den gesamten Prozeßablauf beibehalten wird. Sobald das Gemisch die Temperatur des Heizbades 3 angenommen hat, wird zu einem mit dem Koordinatenursprung angenommenen Zeitpunkt das Sperrventil 9 geöffnet und die Vakuumpumpe 4 eingeschaltet. Das in dem Verdampfersystem erzeugte Vakuum läßt dann die Druckkurve I für eine Annäherung des Komponentengemisches an den Siededruck seiner am leichtesten siedenden Komponente abfallen. Dieses Abfallen der Druckkurve I während einer ersten Einschaltdauer A der Vakuumpumpe 4 wird mittels des Drucksensors 10 gemessen und kann für eine Überwachung eine parallel geschaltete Anzeige erfahren. Das Abfallen der Druckkurve I resultiert in einem praktisch synchron ablaufenden Anstieg einer zweiten Kurve II, welche die sich nach dem Prozeßstart in dem Verdampfersystem einstellende Differenz $\Delta\vartheta$ zwischen der Austrittstemperatur $\vartheta_A$ und der Eintrittstemperatur $\vartheta_E$ des Kühlwassers veranschaulicht und als Nachweis einer stattfindenden Kondensatbildung berücksichtigt wird.

Der Anstieg der Temperaturkurve II wird für die Steuerung eines ersten Ausschalt-Zeitpunktes B der Vakuumpumpe 4 durch ein mit einer Betätigung des Elektromagneten 8 gesteuertes Schließen des Sperrventils 9 überwacht. Die Überwachung stellt sich dabei als ein Vergleich der einen Istwert ergebenden Differenz der mit den beiden Sensoren 15,16 erfaßten Temperaturmeßwerte für das Kühlwasser mit einem vorgegebenen oberen Differenz-Schwellwert dar, der als Sollwert mit der gestrichelten Linie III veranschaulicht ist. Der für die Vakuumpumpe 4 maßgebliche erste Ausschalt-Zeitpunkt B wird somit erhalten, wenn bei diesem Soll-Istwert-Vergleich eine Übereinstimmung der Werte ermittelt wird.

Wenn zu dem Zeitpunkt B die Vakuumpumpe 4 ausgeschaltet ist, ist dann ein weiteres Abfallen der Druckkurve I unterbrochen. Während der Unterbrechung kann eine erste Gemischkomponente als ein mit dem Auffangkolben 11 gesammeltes Destillat rückgewonnen werden. Das Ende dieser Rückgewinnung kündigt sich typischerweise in einem Abfallen der Temperaturkurve II an. Ähnlich dem Anstieg wird auch dieses Abfallen der Temperaturkurve II für einen weiteren Soll-Istwert-Vergleich überwacht, um zu einem nächsten Zeitpunkt C mit einem Öffnen des Sperrventils 9 die Vakuumpumpe 4 wieder einzuschalten. Der Einschalt-Zeitpunkt C wird bei Feststellung einer Übereinstimmung zwischen der dabei wieder den Istwert bildenden Differenz $\Delta\vartheta$ der beiden Temperaturmeßwerte $\vartheta_A$ und $\vartheta_E$ für das Kühlwasser und einem abweichend vorgegebenen unteren Differenz-Schwellwert erhalten, der in Fig.2 mit der gestrichelten Linie IV veranschaulicht ist.

Während der nächsten Einschaltdauer D der Vakuumpumpe 4 wird das Abfallen der Druckkurve I fortgesetzt, was folglich wieder einen Anstieg der Temperaturkurve II auslöst, sofern in dem Gemisch noch eine Komponente enthalten ist, die bei dem dann weiter reduzierten Vakuum einen folglich höheren Siedepunkt als die zwischen den Zeitpunkten B und C rückgewonnene Gemischkomponente aufweist. Wenn bei der Überwachung dieses wiederholten Anstieges der Temperaturkurve II bzw. bei einem entsprechenden Soll-Istwert-Vergleich wieder eine Übereinstimmung mit dem oberen Differenz-Schwellwert III festgestellt wird, dann wird zu einem nächsten Zeitpunkt E die Vakuumpumpe 4 wieder ausgeschaltet, um auch die folglich schwerer siedende Gemischkomponente als Destillat rückzugewinnen. Die sich wieder in einem Abfallen der Temperaturkurve II abzeichnende Beendigung dieser Rückgewinnung führt zu der Ermittlung eines nächsten Einschalt-Zeitpunktes F sowie schließlich zu einer Beendigung des Prozeßablaufs nach einer nächsten Einschaltdauer G der Vakuumpumpe, wenn während dieser nächsten Einschaltdauer nicht zu einem wesentlich früheren Zeitpunkt mit einer nächsten, dann bei einem noch höheren Siedepunkt siedenden Komponente des Gemisches nochmals ein Ausschalten der Vakuumpumpe durch einen entsprechenden Vergleich mit dem oberen Differenz-Schwellwert III erhalten worden ist.

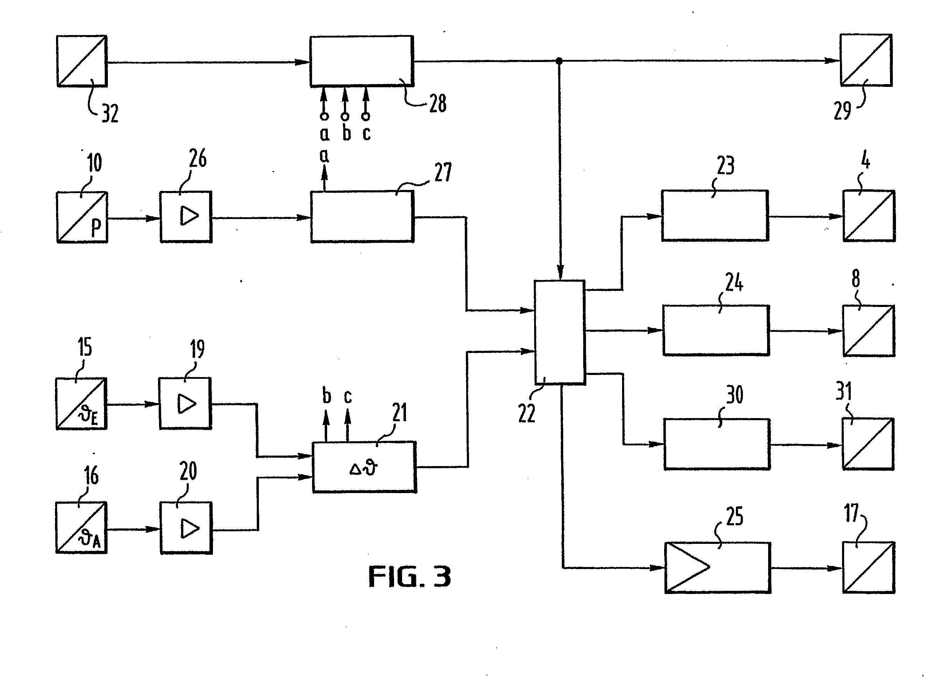

Ausweislich des Blockdiagramms der Fig.3 läßt sich der vorgeschilderte Prozeßablauf mittels einer Steuervorrichtung selbsttätig steuern, bei welcher der Drucksensor 10 sowie die Temperatursensoren 15,16 die den Prozeßablauf bestimmenden Meßwertsignale erzeugen. Die von den Temperatursensoren gelieferten Meßwertsignale für die Ein- und Austrittstemperaturen $\vartheta_E$ und $\vartheta_A$ des Kühlwassers werden durch Verstärker 19 und 20 verstärkt, bevor aus ihnen mit einer Differenzschaltung 21 die Differenz $\Delta\vartheta$ gebildet wird. Ein von der Differenzschaltung 21 erzeugtes Differenzsignal wird an eine Logikschaltung 22 geliefert, die für einen Vergleich des somit der Temperaturkurve II folgenden Differenzsignals mit oberen und unteren Differenz-Schwellwertsignalen entsprechend der Vorgaben gemäß den Linien III und IV in Fig.2 ausgebildet ist. Durch die Logikschaltung 22 wird daher fallweise ein Einschaltsignal an eine Steuereinrichtung 23 der Vakuumpumpe 4 und ein Ausschaltsignal an eine Steuereinrichtung 24 des das Sperrventil 9 betätigenden Elektromagneten 8 geliefert, womit die Einschalt-Zeitpunkte C und F sowie die Ausschalt-Zeitpunkte B und E gesteuert werden können.

Die Logikschaltung 22 ist optimal außerdem zur Lieferung eines jedem Ausschaltsignal zeitverzögert folgenden Steuersignals an eine die Strömung des Kühlwassers reduzierend regelnde Regeleinrichtung 25 des Kondensators 6 ausgebildet. Das Steuersignal für diese Regeleinrichtung kann damit erhalten werden, daß jeder Anstieg der Temperaturkurve II gemäß der Darstellung in Fig.2 nicht nur auf das Erreichen des oberen Differenz-Schwellwertes III, sondern auch auf das Erreichen eines dazu höheren, durch die strichpunktierte Linie V verdeutlichten Regelwertes überwacht wird. Wenn somit durch die Logikschaltung 22 nachfolgend zu einem Ausschalt-Zeitpunkt B oder E auch eine Übereinstimmung mit diesem Regelwert V festgestellt wird, dann wird durch die Regeleinrichtung 25 die Menge des durch die Kühlschlange 12 des Kondensators 6 strömenden Kühlwassers solange reduzierend geregelt, bis die Temperaturkurve II wieder eine mit dem Regelwert vorgegebene Regelhöhe der Kühlwassertemperatur verläßt. Die Regeleinrichtung 25 kann dafür mit einer Steuereinrichtung für den Elektromagneten 17 des Sperrventils 18 verbunden sein.

Die Logikschaltung 22 ist optimal auch für eine Verknüpfung der an die Steuereinrichtungen 23 und 24 gelieferten Ein- und Ausschaltsignale sowie des an die Regeleinrichtung 25 gelieferten Steuersignals mit dem von dem Drucksensor 10 für den Systemdruck p gelieferten Meßwertsignal ausgebildet. Ähnlich den Meßwertsignalen der Temperatursensoren 15,16 wird auch das Meßwertsignal des Drucksensors 10 durch einen Verstärker 26 verstärkt, bevor es für diese Verknüpfung über eine Auswerteschaltung 27 an die Logikschaltung 22 angeliefert wird. Die Auswerteschaltung 27 kann das verstärkte Meßwertsignal a des Drucksensors 10 beispielsweise für eine Weiterleitung an eine Meldeeinrichtung 28 auswerten, damit unter deren Vermittlung beispielsweise eine überwachende Meldeanzeige an eine Anzeigeeinrichtung 29 der Steuervorrichtung erfolgen kann. Der Meldeeinrichtung 28 können dann optimal auch die verstärkten Meßwertsignale b und c der beiden Temperatursensoren 15, 16 angeliefert sein. Weiterhin kann die Auswerteschaltung 27 derart ausgebildet sein, daß unter Vermittlung der Logikschaltung 22 die Lieferung eines Steuersignals an eine Steuereinrichtung 30 für den Rotationsantrieb 31 des Verdampfersystems unterbleibt, wenn bei der Auswertung das Vorhandensein einer dann ebenfalls zur Anzeige an der Anzeigeeinrichtung 29 kommenden Leckstelle gemeldet wird. Schließlich können über die Meldeeinrichtung 28 auch noch weitere Überwachungseinrichtungen 32 an die Anzeigeeinrichtung 29 angeschlossen sein, mit denen optimal eine selbsttätige Steuerung des Prozeßablaufs überwacht wird, wobei solche Arbeitssignale analog dem Meßwertsignal des Drucksensors 10 optimal auch eine Verknüpfung an der Logikschaltung 22 erfahren können.

Das vorbeschriebene Vakuum-Verdampfen ist auf jede in der chemischen Industrie bisher herkömmlich geübte Destillation und Rektifikation von Gemischen unter Einschluß auch von azeotropen Gemischen anwendbar. Das Verfahren ist dabei nicht auf die Anwendung bei einem Rotationsverdampfer beschränkt, obwohl es sich dafür am besten eignet und insoweit ohne jede vorhergehende Kenntnis über die Zusammensetzung eine durchschnittliche Rückgewinnung von wenigstens etwa 99% aller siedenden Komponenten eines Gemisches erzielen läßt. Die für die selbsttätige Steuerung des Prozeßablaufs geübte Temperaturmessung des Kühlmediums muß schließlich nicht zwingend in der unmittelbaren Nähe der Kühleinrichtung vorgenommen werden, sondern kann stattdessen auch in einen zu der Kühleinrichtung parallel geschalteten Meßkreis verlegt sein. Für eine weitere Alternative dieses Meßprinzips ist es auch möglich, anstelle der Differenz der beiden Temperaturmeßwerte für das Kühlmittel das Meßwertsignal eines Wärmestromsensors als eine entsprechende Stellgröße auszuwerten, wobei der Wärmestromsensor im Strömungsweg des Dampfes der Gemischkomponenten anzuordnen wäre, um den die Ursache für die Differenz der Temperaturmeßwerte des Kühlwassers bildenden Wärmestrom meßtechnisch zu erfassen.

**Patentansprüche**

1. Verfahren zum Vakuum-Verdampfen eines wenigstens zweifachen Komponentengemisches, bei dem das Gemisch in einem Temperatur-Druck-Regelsystem auf eine gemischbedingte Niedrigwert-Regeltemperatur erhitzt und auf der Basis eines selbsttätig gesteuerten Soll-Istwert-Vergleichs eines Verfahrensparameters an einen dem Siededruck seiner leichter siedenden Komponente entsprechenden Ausschalt-Zeitpunkt für eine Vakuumpumpe angenähert wird, nach dessen Erreichen die verdampfende Gemischkomponente für eine Rückgewinnung als Destillat durch Kühlung mit einem durch eine Kühleinrichtung strömenden Kühlmedium kondensiert wird, dadurch gekennzeichnet, daß an einer der Kühleinrichtung (6, 12) nahen Stelle die Eintrittstemperatur ($\vartheta_E$) und die Austrittstemperatur ($\vartheta_A$) des Kühlmediums gemessen und der Ausschalt-Zeitpunkt (B, E) sowie ein wiederholter Einschalt-Zeitpunkt (C, F) der Vakuumpumpe (4) durch einen Vergleich der einen Istwerte ergebenden Differenz ($\Delta\vartheta$) dieser Temperaturmeßwerte mit einem vorgegebenen oberen Differenz-Schwellwert (III) und einem vorgegebenen unteren Differenz-Schwellwert (IV) gesteuert werden.

2. Verfahren nach Anspruch 1, dadurch gekennzeichnet, daß mit einem gegenüber dem oberen Differenz-Schwellwert (III) höheren Regelwert (V) für die Differenz ($\Delta\vartheta$) der Temperaturmeßwerte für das Kühlmedium dessen durch die Kühleinrichtung strömende Menge reduzierend geregelt wird.

3. Verfahren nach Anspruch 1 oder 2, dadurch gekennzeichnet, daß wenigstens nach dem mit dem oberen Differenz-Schwellwert (III) erstmals gesteuerten Ausschalten der Vakuumpumpe (4) ein weiteres Verdampfen des Komponentengemisches unterbrochen wird.

4. Verfahren nach einem der Ansprüche 1 bis 3, dadurch gekennzeichnet, daß jedes wiederholte Einschalten der Vakuumpumpe (4) auf eine maximale Einschaltzeit begrenzt und bei deren Erreichen das Verdampfen des Komponentengemisches beendet wird.

5. Vorrichtung zur selbsttätig gesteuerten Durchführung des Verfahrens nach Anspruch 1, insbesondere in der Anwendung bei einem Rotationsverdampfer, der einen mit einer Heizeinrichtung erhitzbaren Verdampferkolben (1), einen durch Kühlwasser kühlbaren Kondensator (6, 12) und eine zur Erzeugung eines Vakuums im Kondensator und im Verdampferkolben angeordnete Vakuumpumpe (4) umfaßt, wobei die Vorrichtung eine für einen Vergleich eines Sollwertes mit einem Istwert ausgebildete Logikschaltung (22) aufweist, die ein Ausgangssignal liefert, mit dem ein Ausschalten der Vakuumpumpe (4) gesteuert wird, gekennzeichnet durch einen ersten und einen zweiten Temperatursensor (15, 16), die aktuelle Meßwerte für die Eintrittstemperatur ($\vartheta_E$) und für die Austrittstemperatur ($\vartheta_A$) des durch den Kondensator (6, 12) strömenden Kühlwassers liefern; und
eine mit der Logikschaltung (22) verbundene Differenzschaltung (21), durch welche eine Differenz ($\Delta\vartheta$) aus den beiden Temperaturmeßwerten für das Kühlwasser gebildet wird, wobei
die Logikschaltung (22) für eine Lieferung des die Vakuumpumpe (4) ausschaltenden Ausgangssignals bei jeder von ihr festgestellten Übereinstimmung eines mit der Differenz ($\Delta\vartheta$) gebildeten Differenzsignals mit einem oberen Differenz-Schwellwertsignal (III) sowie für die Lieferung eines die Vakuumpumpe (4) wieder einschaltenden zweiten Ausgangssignals bei jeder von ihr festgestellten Übereinstimmung des Differenzsignals mit einem unteren Differenz-Schwellwertsignal (IV) ausgebildet ist.

6. Vorrichtung nach Anspruch 5, dadurch gekennzeichnet, daß die Logikschaltung (22) zur Lieferung auch eines dem Ausschaltsignal für die Vakuumpumpe (4) zeitverzögert folgenden Steuersignals an eine die Strömung des Kühlwassers reduzierend regelnde Regeleinrichtung (25) des Kondensators (6,12) ausgebildet ist.

7. Vorrichtung nach Anspruch 5 oder 6, dadurch gekennzeichnet, daß die Logikschaltung (22) zur Lieferung eines Anzeigesignals für eine im Verdampfersystem vorhandene Leckstelle ausgebildet ist, wobei das Anzeigesignal aus einer Verknüpfung der Aus- und Einschaltsignale für die Vakuumpumpe (4), des Steuersignals für die Regeleinrichtung (25) und eines von einem Drucksensor (10) gelieferten Meßwertsignals für den Systemdruck (p) des Verdampfersystems erhalten wird.

8. Vorrichtung nach einem der Ansprüche 5 bis 7, dadurch gekennzeichnet, daß für die Temperaturmessung des Kühlwassers ein zu dem Kondensator (6,12) parallel geschalteter Meßkreis vorgesehen ist.

9. Vorrichtung nach einem der Ansprüche 5 bis 8, dadurch gekennzeichnet, daß die beiden Temperatursensoren (15, 16) und die mit ihnen verbundene Differenzschaltung (21) durch einen mit der Logikschaltung (22) verbundenen Wärmestromsensor ersetzt sind, der zur Messung des bei der Kondensation des Dampfes einer Gemischkomponente anfallenden Wärmestromes im Strömungsweg des Dampfes an einer dem Kondensator nahen Stelle angeordnet ist, wobei die Logikschaltung (22) für eine Lieferung des die Vakuumpumpe (4) ausschaltenden Ausgangssignals bei jeder von ihr festgestellten Übereinstimmung eines mit dem Meßwert für den Wärmestrom gebildeten Meßwertsignals mit einem oberen Schwellwertsignal sowie für die Lieferung eines die Vakuumpumpe (4) wieder einschaltenden zweiten Ausgangssignals bei jeder von ihr festgestellten Übereinstimmung des Meßwertsignals mit einem unteren Schwellwertsignal ausgebildet ist.

**Revendications**

1. Procédé à évaporer à vide un mélange d'au moins deux composants, au cours duquel le mélange est chauffé à une température de réglage à basse valeur dépendante du mélange dans un système de réglage de température et de la pression, après quoi le mélange est approché, à la base d'une comparaison des valeurs prévues avec les valeurs réelles automatique d'un des paramètres opératoires, a à un moment d'arrêt pour une pompe à vide, qui correspond à la pression d'ébullition de son composant d'un plus bas point d'ébullition, le composant du mélange évaporisant, arrivé au moment d'arrêt, étant condensé par un agent réfrigérant écoulant par un système de refroidissement, pour être récupéré, caractérisé en ce qu'à une place proche audit système de refroidissement (6, 12), la température d'arrivée ($\vartheta_E$) et la température de sortie ($\vartheta_A$) de l'agent réfrigérant sont mesurées, et en ce que le moment d'arrêt (B, E) ainsi qu'un moment de démarrage en répétition (C, F) de la pompe à vide sont commandés par une comparaison d'une différence ($\Delta\vartheta$) entres cettes valeurs de température mesurées, qui constitue une valeur réelle, avec une valeur seuil de différence supérieure définie (III) et une valeur seuil de différence inférieure définie (IV).

2. Procédé selon la revendication 1, caractérisé en ce qu'à une valeur de réglage (V) de la différence ($\Delta\vartheta$) entre les valeurs de température de l'agent réfrigérant, qui dépasse ladite valeur seuil de différence supérieure (III); la quantité dudit agent réfrigérant qui passe par ledit système de refroidissement, et régulée en réduction.

3. Procédé selon la revendication 1 ou 2, caractérisé en ce qu'au moins après l'arrêt de la pompe à vide (4), qui est commandé le premier fois par la valeur seuil de différence supérieure (III), l'évaporation ultérieure du mélange de composants est interrompue.

4. Procédé selon quelconque des revendications 1 à 3, caractérisé en ce que chaque démarrage en répétition de la pompe à vide (4) est limité à une période de démarrage maximale et que l'évaporation du mélange de composants est finie quand cette période est expirée.

5. Dispositif à mettre en œuvre le procédé selon la revendication 1 sous contrôle automatique, en particulier pour l'utilisation dans un évaporateur rotatif qui comprend un ballon évaporateur (1) chauffable au moyens d'un système de chauffage, un condenseur (6, 12) refroidissable au moyens de l'eau réfrigérante, ainsi qu'une pompe à vide (4) disposée dans ledit ballon évaporateur, ce dispositif de même comprenant un circuit logique (22) approprié pour la comparaison d'une valeur prévue avec une valeur réelle, qui fournit un signal de sortie à commander l'arrêt de ladite pompe à vide (4), caractérisé par un premier et un deuxième palpeur de température (15, 16), les deux palpeurs fournissant des valeurs mesurées actuelles de la température d'arrivée ($\vartheta_E$) et de la température de sortie ($\vartheta_A$) de l'eau réfrigérante qui passe par ledit condenseur (6, 12), ainsi qu'un circuit différenciateur (21) relié audit circuit logique (22), à calculer une différence ($\Delta\vartheta$) desdites deux valeurs mesurées de la température de l'eau réfrigérante, ledit circuit logique (22) étant si constitué qu'à chaque correspondance établie entre le signal de différence formé à la base de la différence ($\Delta\vartheta$) et un signal de valeur seuil de différence supérieure (III), il fournisse le signal de sortie pour l'arrêt de ladite pompe à vide (4), pendant qu'à chaque correspondance établie entre le signal de différence et un signal de valeur seuil de différence inférieure (IV), il fournisse un deuxième signal de sortie pour le ré-démarrage de ladite pompe à vide (4).

6. Dispositif selon la revendication 5, caractérisé en ce que le circuit logique (22) est si constitué qu'il fournisse de même un signal de commande suivant en retard ledit signal d'arrêt de la pompe à vide (4), à un système régulateur (25) du condenseur (6, 12) qui règle en réduction l'écoulement de l'eau réfrigérante.

7. Dispositif selon la revendication 5 ou 6, caractérisé en ce que le circuit logique (22) est si constitué qu'il fournisse un signal d'indication d'une fuite présente dans le système d'évaporateur, ledit signal d'indication résultant d'une opération logique sur lesdits signaux d'arrêt et de démarrage de la pompe à vide (4), sur le signal de commande dudit système régulateur (25), ainsi que sur un signal de valeur mésurée de la pression (p) du système évaporateur, qui est fournit par un capteur de pression (10).

8. Dispositif selon quelconque des revendications 5 à 7, caractérisé en ce qu'un circuit de mesure parallèle audit condenseur (6, 12) est pourvu pour la mesure de la température de l'eau réfrigérante.

9. Dispositif selon quelconque des revendications 5 à 8, caractérisé en ce que lesdits deux palpeurs de température (15, 16) ainsi que ledit circuit différenciateur (21) en relié sont remplacés par un capteur du flux de chaleur relé audit circuit logique (22), ledit capteur du flux étant disposé dans le chemin d'écoulement de la vapeur à une position proche au condenseur pour la mesure d'un flux de chaleur produit au cours de la condensation de la vapeur d'un composant du mélange, et en ce que ledit circuit logique (22) étant si constitué qu'à chaque correspondance établie entre le signal de valeur mesurée formé à la base de la valeur mesurée du flux de chaleur et un signal de valeur seuil supérieure, il fournisse le signal de sortie pour l'arrêt de ladite pompe à vide (4), pendant qu'à chaque correspondance établie entre le signal de valeur mesurée et un signal de valeur seuil de inférieure, il fournisse un deuxième signal de sortie pour le ré-démarrage de ladite pompe à vide (4).

**Claims**

1. A method for the vacuum evaporation of a component compound of at least two components, comprising a heating of the compound in a temperature-and-pressure control system to a low value of a control temperature which depends on the compound and approximating the compound to a switch-off time for a vacuum pump which corresponds to the boiling pressure of its easier boiling component, said approximating being effected on the basis of an automatically controlled set-point and feedback-point comparison of an operational parameter whereby when the switch-off time has been reached the evaporating compound component will be successively condensed for a recovery as a distillate by a cooling by means of a coolant flowing through a cooling system, characterised in that at a position close to said cooling system (6, 12) the inlet temperature ($\vartheta_E$) and the outlet temperature ($\vartheta_A$) of the coolant are being measured and that said switch-off time (B, E) as well as a repeated switch-on time (C, F) of said vacuum pump (4) are being controlled by a comparison of the difference ($\Delta\vartheta$) of these two measured temperatures forming said feedback value with a preset upper threshold value (III) of said difference and a preset lower threshold value (IV) of said difference.

2. A method according to claim 1, characterised in that with a control value (V) for said difference ($\Delta\vartheta$) of said measured temperatures for the coolant which is higher than said upper threshold value (III) of said difference the quantity of the coolant flowing through said cooling system is being controlled in a reducing fashion.

3. A method according to claim 1 or claim 2, characerised in that at least when the switch-off for the vacuum pump (4) is controlled for the first time with said upper threshold value (III) of said difference a continued evaporation of the component compound is being stopped.

4. A method according to any of the claims 1 to 3, characterised in that each repeated switching-on of the vacuum pump (4) is limited to a maximum switch-on time which when reached stops the evaporation of the component compound.

5. A system for an automatically controlled performance of the method according to claim 1, especially when applied to a rotary evaporator and comprising an evaporator flask (1) which may be heated by a heating device, a condenser (6, 12) which may be cooled by means of a coolant, and a vacuum pump (4) for the establishment of a vacuum within said condenser and said evaporator flask, whereby the system further comprises a logical circuit (22) for allowing a comparison of a set-point value with a feedback-point value and for supplying an output signal with which a switch-off of the vacuum pump (4) is being controlled, characterised in that a first and a second temperature sensor (15, 16) are provided for measuring the inlet temperature ($\vartheta_E$) and the outlet temperature ($\vartheta_A$) of the coolant flowing through the condenser (6, 12), and that a differentiating circuit (21) for forming a difference ($\Delta\vartheta$) of the two measured temperatures of the coolant is connected to said logical circuit (22), whereby the logical circuit (22) is formed so as to supply an output signal for switching-off the vacuum pump (4) each time when a coincidence has been established between a difference signal formed with said difference ($\Delta\vartheta$) and an upper difference threshold value signal (III) and to supply a second output signal again switching-on the vacuum pump (4) each time when a coincidence between said difference signal and a lower difference threshold value signal (IV) has been established.

6. A system according to claim 5, characterised in that said logical circuit (22) is formed so as to also supply a time-delayed control signal which follows the switch-off signal for the vacuum pump (4) and which control signal is supplied to a control means (25) of the condenser (6, 12) for controlling a reduced flow of the coolant.

7. A system according to claim 5 or claim 6, characterised in that said logical circuit (22) is formed so as to supply a monitoring signal for a leakage in the evaporation system whereby the monitoring signal is obtained by a logical operation of the switching-off and the switching-on signals for the vacuum pump (4), of the control signal for the control means (25), and of a measured value signal for the system pressure (p) of the evaporating system as supplied by a pressure sensor (10).

8. A system according to any of the claims 5 to 7, characterised in that for the temperature measurement of the coolant a shunt circuit is provided in parallel with said condenser (6, 12).

9. A system according to any of the claims 5 to 8, characterised in that the two temperature sensors (15, 16) and said interconnected differentiating circuit (21) are replaced by a heat flow sensor as connected to said logical circuit (22) and arranged in the flow path of the vapour at a position close to said condenser for measuring the heat flow that occurs during the condensation of the vapor of a compound component, whereby the logical circuit (22) is formed for supplying a switch-off output signal for the vacuum pump (4) each time when a coincidence between a measured value signal for the measured value of the heat flow and an upper threshold value signal has been established and for supplying a second output signal for again switching-on the vacuum pump (4) each time when a coincidence between said measured value signal and a lower threshold value signal has been established.

FIG. 1

FIG. 2

FIG. 3